# EUROPEAN PATENT APPLICATION

(11) **EP 2 669 531 A1**
(43) Date of publication of application: **04.12.2013**
(21) Application number: 12170533.9
(22) Date of filing: 01.06.2012
(51) Int. Cl.: F16B 5/02, H02K 1/12, H02K 1/14, H02K 1/18, H02K 15/16

(54) **Fixing of stator segment elements**

(71) Applicant: Siemens Aktiengesellschaft, 80333 München (DE)
(72) Inventor: Madsen, Anders Jakob, 7800 Skive (DK); Valbjoern, Jesper, 6000 Kolding (DK)

(57) **Abstract**

Segment (100) for a segmented stator is described, wherein the segment (100) comprises a first element (101), a second element (102), and an eccentric pin (105), wherein one of the first element (101) and the second element (102) comprises a non-circular hole (104) adapted to receive the first end of the excentric pin (105) and wherein the other one of the first element (101) and the second element (102) comprises a hole (103) adapted to receive the other end of the excentric pin (105), opposite the first end.

## Description

### Field of invention

The present invention relates to stator segment and to a method of assembling the same, in particular to a stator of a generator or a motor. Moreover the invention relates to a stator and a generator comprising the same.

### Art Background

Generators or motors, e.g. electric motors, typically comprise a rotor and a stator. In principle, the machines are formed as a so called external rotor type, i.e. the rotor is arranged around the stator, or as an internal rotor type, i.e. the stator is arrenged around the rotor.

One main criterion for the performance of a generator is an airgap between rotor and stator. Due to tolerances of the major parts of the generator, this airgap has some variation from generator to generator. A zero variation in the airgap, i.e. all generators produced has the same airgap, and hence zero variation in performance would be the optimum. However, this ideal case may be hard to achieve.

In order to achieve such an ideal manufacturing process and ideal generator it is tried to impose very tight tolerances on the different parts used to assemble the generator. However, this can only partly solve the problem so that still some generators may be produced in which the dimension of the airgap is outside the specifications.

Thus, there may be a need for providing a stator segment and a method of manufacturing the same which may be suitable to reduce variations in the performance of a generator or motor.

### Summary of the Invention

This need may be met by a stator segment, a method of manufacturing the same, a stator and a generator according to the independent claims. Advantageous embodiments are described by the dependent claims.

According to an exemplary aspect a segment for a segmented stator is provided, wherein the segment comprises a first element, a second element, and an excentric pin, wherein one of the first element and the second element comprises a non-circular hole adapted to receive a first end of the excentric pin and wherein the other one of the first element and the second element comprises a hole adapted to receive a second, opposite end of the excentric pin.

In particular, one of the first element and the second element may be a stator plate or a portion of a stator plate. Such a stator plate may be an element to which one segment or all segments of a stator may be fixed. Thus, the stator plate of a generator may be segmented as well so that onto each segment or portion of the stator plate one segment of the stator is fixed or may be formed by a single element onto which all segments of the stator are fixed. In case a single stator plate is provided for the stator the stator plate may span a whole circle.

In particular, the hole, which is not the non-circular hole, may be a circular or at least substantially circular hole. In particular, the first element and/or the second element may comprise a plurality of holes and/or second holes. For example, two non-circular holes may be formed in one of the first and second elements, while two holes, e.g. circular holes, may be formed in the other one of the first and second elements. In particular, the number of non-circular holes in the one element may correspond or match the number of holes, e.g. circular holes, in the other element. Of course the number of excentric pins may match the number of non-circular holes and/or number of holes.

According to another exemplary aspect a segmented stator is provided which comprises a plurality of segments according to an exemplary aspect. It should be noted again that some of the first and/or second elements of the segments may be formed by a single element, e.g. a stator plate, which may span a whole circle of 360°.

According to yet another exemplary aspect a generator is provided which comprises a stator according to an exemplary aspect and a rotor. In particular, the rotor may be arranged around the stator or the stator may be arranged around the rotor, i.e. the generator may be of an external rotor type or of an internal rotor type.

According to still another exemplary aspect a method of adjusting a dimension of a stator segment for a segmented stator is provided, wherein the method comprises providing a first element of a stator element comprising a non-circular hole, providing a second element of the stator element comprising a further hole, forming a stator element by inserting an excentric pin into the non-circular hole and into the further hole, and adjusting a dimension of the stator element by turning the excentric pin. In particular, the dimension may be a radial dimension of a stator segment. The turning of the excentric pin may in particular at least substantially be around a longitudinal axis of the excentric pin. In particular, the dimension may be a radial dimension of a stator segment. For example, one of the elements may be a stator plate, i.e. a fixed element onto which the stator segments can be fixed.

By turning the excentric pin inserted into the non-circular hole and the further hole a relative movement between the first element and the second element may be induced. In case one element is a stator plate having a fixed position in the generator the other element may be moved relative to the stator plate. This relative movement may provide a change in a dimension of the segment or the stator so that an adjustment of the dimension of the segment and thus of the stator may be provided. In particular, due to the use of a non-circular hole and an excentric pin it may be possible that the relative movement may be totally or at least predominantly only in one direction, e.g. a radial direction in case the segment forms a segment of a circle.

The term "excentric pin" may particularly denote a pin having at least on one longitudinal end a cross section which is excentric with respect to a longitudinal axis of the excentric pin. The excentric cross section may be formed by providing a non-symmetric cross section or by providing a symmetric cross section a center of which is offset with respect to the longitudinal axis of the excentric pin or to a center of the other end. For example, an excentric pin may be a pin which is formed on the first end by a circular cross section having a center or center point, which coincides with the longitudinal axis of the excentric pin, while the second, opposite end has a cross section which is excentric to the center of the first end. It should be noted that of course both ends may have a circular cross section or one or both ends may have a non-circular cross section. In general an excentric pin has the effect that in case the excentric pin is rotated or turned at least one end does not only rotate but that a center of this end moves translational as well.

The term "segment of a stator" may particularly denote a circumferential segment or portion of the stator. That is a segment of a stator refers to a circumferential portion of the stator. In a broad sense a segment of the stator may even include a corresponding portion of a stator plate (which may be formed by one of the first element and second element) onto which one of the first and second elements is fixed. In particular, along a circumference of a stator sixth segments may be arranged each forming an angle of 60° so that a combination of sixth segments will form a full circle of 360°. Every other number of segments may be used in order to form a full circle. However, it is preferred that the angle spanned by each respective segment is a divisor of 360°.

By turning the excentric pin inserted into the non-circular hole and the further hole a relative movement between the first element and the second element may be induced. This relative movement may provide a change in a dimension of the formed or fixed segment so that an adjustment of the dimension of the stator the segment is part of may be provided. In particular, due to the use of a non-circular hole and an excentric pin it may be possible that the relative movement may be totally or at least predominantly only in one direction, e.g. a radial direction in case the segment forms a segment of a circle. However, the relative movement may be in two or even three dimension depending on the specific form of the excentric pin and the respective holes into which the excentric pin is inserted.

Next further embodiments of the stator segment will be described. However, these embodiments also apply to the stator, the generator and the method of manufacturing a stator segment.

According to an exemplary embodiment the segment further comprises a guiding element, which is adapted to guide a relative movement between the first element and the second element.

By providing a guiding element it may be possible that a turning of the excentric pin may only induce a one dimensional relative movement between the first and the second element, e.g. a pure or substantially pure movement in a radial direction of the segment.

According to an exemplary embodiment of the segment the guiding element is formed by a guiding groove and a guiding pin, wherein the guiding groove is arranged on one of the first element and the second element and the guiding pin is arranged on the other one of the first element and the second element. For example the guiding pin may be arranged on the element which forms or which is a portion of a so called stator plate onto which the segment of the stator is fixed.

Alternatively or in addition to the guiding groove and the guiding pin the guiding element may be formed or may further comprise any other elements suitable for guiding a relative movement, e.g. slots, walls, benches, pins, cams or the like.

According to an exemplary embodiment of the segment one of the first end and the second end of the excentric pin comprises a feature adapted to turn the excentric pin around its longitudinal axis.

For example the feature may be a recess, e.g. a hexagonal recess or socket. Another possibility would be to provide a plurality of recesses forming a predetermined pattern into which recesses a single tool having protrusion arranged in a corresponding pattern can be introduced. Thus, by turning the tool a turning of the excentric pin is enabled. In particular, the end of the excentric pin having the turning feature may be the end which is adapted to be introduced into the hole. However, it may also be the other end of the excentric pin, i.e. the end which is adapted to be introduced into the non-circular hole.

According to an exemplary embodiment of the segment the end of the excentric pin, which does not comprise the feature for turning the excentric pin, comprises a recess adapted to receive a bolt.

The bolt may be an efficient way for locking the excentric pin to the first and/or second element, e.g. by using the bolt together with a nut and/or shim.

According to an exemplary embodiment of the segment the non-circular hole has a shape of a curved slot hole.

In particular, the curvature of the slot hole may correspond to the curvature of the segment. That is, longer sides of the slot hole may have a curvature which substantially resembles the curvature of the segment which is adapted to form a portion of the circumference of a circle.

According to an exemplary embodiment of the segment at least one of the first element and the second element has an oblong shape having longer sides and shorter sides and the non-circular hole and/or the further hole are arranged on the shorter sides of the oblong shaped element.

In particular, in case one of the first element and the second element is formed by a portion of a single stator plate the oblong shaped element may be the other one of the first and second elements. However, in case both elements span only a fraction of a full circle, i.e. the stator plate is segmented or divided into portions as well, both elements may have an oblong shape. In particular, the non-circular hole and/or the further hole may be arranged in the corners of the first element and/or the second element. The term "arranged on the shorter side" may particularly denote that a specific location, e.g. the location of the non-circular hole(s) and the further hole(s), is in the proximity of the shorter side or closer to the shorter side than to the longer sides. For example, the hole(s) may be arranged in an area formed by 15% of the total length (defined by the longer side(s) of the element, i.e. may be formed in areas having 15% of the total length of the elements on both sides of the elements.

According to an exemplary embodiment of the segment the first element and the second element are fixed to each other. In particular, one of the first and second elements may be fixed to a stator plate forming the other one of the both elements. The first element and the second element may be fixed to each other by any suitable means, e.g. by using screws, bolts, pins or the like of be welding or soldering the same to each other. It should be noted that the excentric pin may only be used for adjusting the airgap while afterwards when the airgap is adjusted the two elements may fixed to each other by the above mentioned means in such a way that they cannot perform relative movement any more. Thus, the excentric pin(s) may be used to adjust and afterwards the set relative position is fixedly secured by other means.

Summarizing segment for a stator according to an exemplary aspect may comprise a first element and a second element, one of which may be a stator plate or a portion of a stator plate. One of the first and second elements may comprise a non-circular, e.g. a curved oblong hole, while the other one may comprise a circular hole. Into the holes an excentric pin may be inserted so that one end of the excentric pin fits into the circular hole while the other one fits into the non-circular hole. Thus, the two elements are connected to each other and in case the excentric pin is fixed or locked to the elements the two elements are locked or fastened to each other. By then turning the excentric pin a relative movement of the first element with respect to the second element may be induced. By providing a guiding element on the first and/or second element the relative movement may be limited to two or even one dimension, e.g. a radial direction of the segment. After the setting or adjusting of the relative position leading to a set outer or inner diameter of the stator segment, for example, the relative position may be fixed by other means, e.g. bolts, screws or the like.

Thus, a method to adjust an outer or inner diameter, depending whether the stator is used in an external rotor or internal rotor type, of the stator after assembly of the same may be provided. The main idea of this exemplary embodiment may be to use an excentric pin or bushing in combination with a non-circular hole. The advantage of using the non-circular hole may be that the segment is only moved in the radial direction, while the other directions may be still controlled by the segment main connection surfaces which may be formed by so called stator plates and the guiding pin.

Thus, it may be possible to do a precise final adjustment of the stator outer or inner diameter, and therefore possibly allowing a less precise procedure for manufacturing the parts of the stator, which in turn may lead to reduced costs. Furthermore, it may be possible to adjust the airgap after assembly of the generator, i.e. at a time the stator is already fitted in the generator assembly.

The aspects defined above and further aspects of the present invention are apparent from the examples of embodiment to be described hereinafter and are explained with reference to the examples of embodiment. The invention will be described in more detail hereinafter with reference to examples of embodiment, but to which the invention is not limited.

### Brief Description of the Drawings

Fig. 1 schematically shows a detailed cross-sectional view of a segment according to an exemplary embodiment.
Fig. 2 schematically shows a general aspect of segment according to an exemplary embodiment.
Fig. 3 schematically shows a non-circular and a circular hole.
Fig. 4 schematically shows an excentric pin.

### Detailed Description

The illustration in the drawing is schematically. It is noted that in different figures, similar or identical elements are provided with the same reference signs or with reference signs, which are different from the corresponding reference signs only within the first digit.

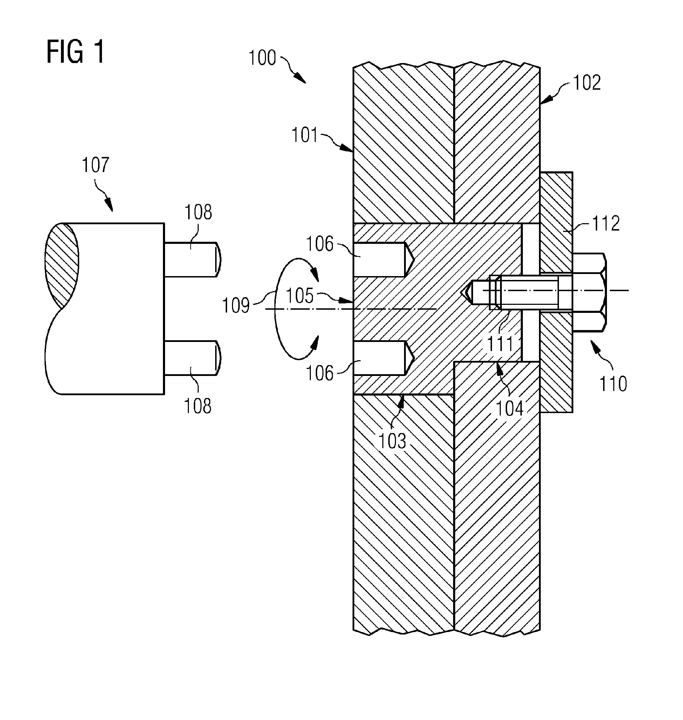

Fig. 1 schematically shows a detailed cross-sectional view of a segment 100 according to an exemplary embodiment. In particular, Fig. 1 shows a first element 101 or stator plate and a second element 102 forming a portion of a segmented stator. That is, the first element 101 may be formed by a portion of circumferential portion of a stator plate. It should be noted that the stator plate may be adapted in such a way that a plurality of second elements can be fixed to the same stator plate. In particular, the stator plate may have an extension of or may span 360° of a circle.

The first element 101 or portion of a stator plate comprises a circular hole 103, while the second element 102 comprises a non-circular hole 104. In Fig. 1 an excentric pin 105 is inserted into the circular hole and non-circular hole. The end of the excentric pin 105 which is introduced into the circular hole of the stator plate 101 comprises a turning feature 106, e.g. two recesses formed in that end. By introducing a tool 107 having two projections 108 into the recesses 106 the respective end of the excentric pin can be turned as indicated by arrow 109. Such the other end, which is excentric with respect to the turning axis or centre of the excentric pin, is turned as well. As a result the excentric end of the excentric pins starts to move not only rotationally but also translational in the non-circular hole 104 leading to a radial movement of the second element 102 with respect to the stationary stator plate. Thus, an adjusting of the radial extension or dimension of the stator may be enabled even in case the segment of the stator is already fixed to the stator plate, i.e. the first element.

Furthermore, Fig. 1 shows a bolt 110 which is introduced into a drill, e.g. threaded drill, 111 in the other end of the excentric pin 105. Together with a shim 112 the bolt ensures a fixing of the excentric pin to the first and second elements.

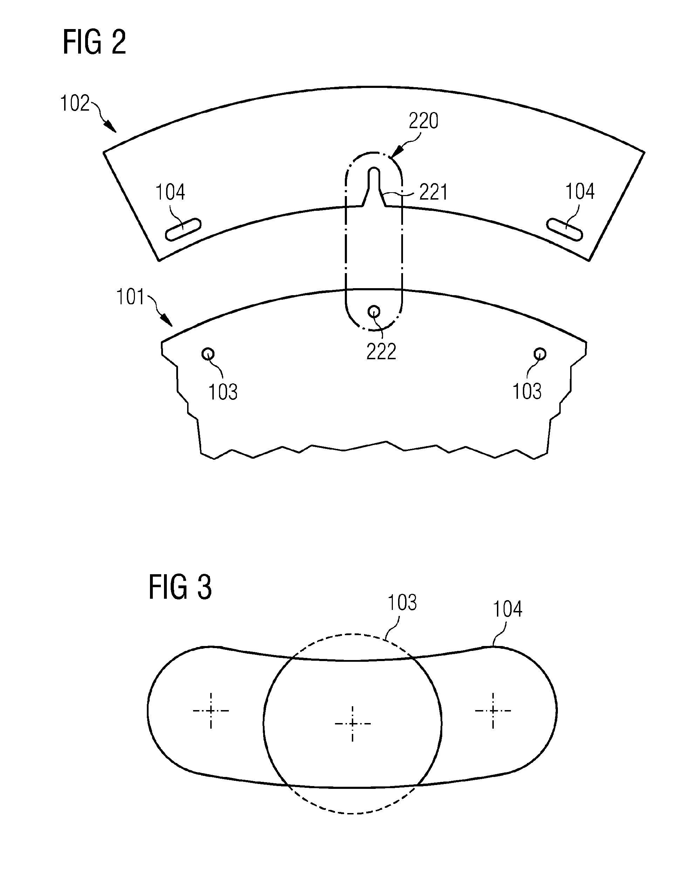

Fig. 2 schematically shows a general aspect of a segment according to an exemplary embodiment. In particular, Fig. 2 shows an aspect of the first element or portion of a stator plate 101 and a second element, e.g. a segment of the stator. In the embodiment shown in Fig. 2 the stator plate is a single element onto which more than one second element can be fixed, i.e. the stator plate spans an angle which is larger than the angle spanned by the second element 102. This is indicated by the undulating edges of the first element 101. As depicted in Fig. 2 a guiding element 220 is provided which comprises a guiding nut 221 on the second element 102 and a guiding pin 222 arranged on the first element 101 forming a portion of the stator plate. Furthermore, the circular holes 103 and the non-circular holes 104 arranged in corners of the first and second elements can be seen in Fig. 2.

Fig. 3 schematically shows the non-circular 104 and the circular hole 103 in detail. One can see that the diameter of the circular hole 103 may be larger than the width of the non-circular hole 104. In this case it may be ensured that the excentric pin can only be introduced into the two elements in the correct way in case the sizes of the ends of the excentric pin match the sizes (diameter and width) of the holes.

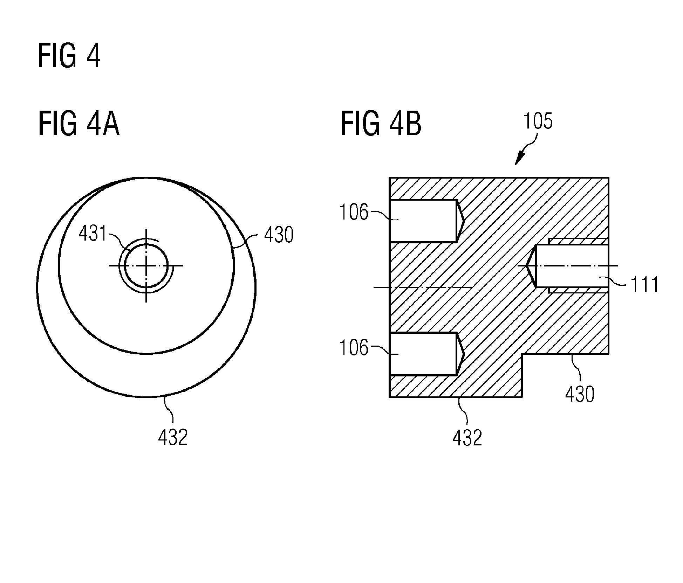

Fig. 4 schematically shows an excentric pin 105 in a top view (Fig. 4A) and a cross-sectional view (Fig. 4B) In particular, Fig. 4A shows an excentric end 430. The excentric end 430 has a circular shape the centre of which 431 is offset to the centre of the other end 432 of the excentric pin. The diameter of the circular excentric end is smaller than the diameter of the other end. In addition in the centre 431 of the excentric end 430 the recess or drill 111, e.g. a threaded drill, is formed into which the bolt 110 can be threaded. Thus, Fig. 4A is a top view onto the excentric end of the excentric pin.

Fig. 4B shows a cross-sectional view of the excentric pin 105 showing the excentric end 430 and the other end 432. In the excentric end 430 a cross-section of the drill 111 can be seen in Fig. 4B while in the other end 432 the two recesses 106 can be seen.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. A segment (100) for a segmented stator comprising:
a first element (101, 102);
a second element (102, 101); and
an excentric pin (105),
wherein one of the first element (101, 102) and the second element (102, 101) comprises a non-circular hole (104) adapted to receive a first end of the excentric pin (105);
wherein the other one of the first element and the second element (101, 102) comprises a hole (103) adapted to receive a second, opposite end of the excentric pin (105).

2. The segment (100) according to claim 1, further comprising a guiding element (220), which is adapted to guide a relative movement between the first element and the second element (101, 102).

3. The segment (100) according claim 2,
wherein the guiding element (220) is formed by a guiding groove (221) and a guiding pin (222), wherein the guiding groove (221) is arranged on one of the first element and the second element (101, 102) and the guiding pin (222) is arranged on the other one of the first element and the second element (102, 101).

4. The segment (100) according to any one of the claims 1 to 3,
wherein one of the first end and the second end (430, 432) of the excentric pin (105) comprises a feature (106) adapted to turn the excentric pin (105) around its longitudinal axis.

5. The segment (100) according to any one of the claims 1 to 4,
wherein the end (430) of the excentric pin (105), which does not comprise the feature for turning the excentric pin (105), comprises a recess (111) adapted to receive a bolt (110).

6. The segment (100) according to any one of the claims 1 to 5,
wherein the non-circular hole (104) has a shape of a curved slot hole.

7. The segment (100) according to any one of the claims 1 to 6,
wherein the first element and/or the second element (101, 102) have an oblong shape having longer sides and shorter sides and the non-circular hole (104) and the further hole (103) are arranged on the shorter sides of the first element and the second element (101, 102).

8. The segment (100) according to any one of the claims 1 to 7,
wherein the first element and the second element (101, 102) are fixed to each other.

9. Stator comprising,
a plurality of segments according to any one of the claims 1 to 8.

10. A generator comprising:
a stator according to claim 9, and
a rotor.

11. Method of adjusting a dimension of a stator segment for a segmented stator, the method comprises:
providing a first element (102) of a stator element comprising a non-circular hole (104),
providing a second element (101) of the stator element comprising a further hole (103),
forming a stator element by inserting an excentric pin (105) into the non-circular hole (104) and into the further hole (103),
adjusting a dimension of the stator element by turning the excentric pin (105).
